# EUROPÄISCHE PATENTSCHRIFT

(11) **EP 4 278 100 B1**
(45) Veröffentlichungstag und Bekanntmachung des Hinweises auf die Patenterteilung: **11.06.2025**
(21) Anmeldenummer: 21805930.1
(22) Anmeldetag: 03.11.2021
(51) Int. Cl.: F16B 5/12, F16L 3/237, H02G 3/32, F16B 2/22

(54) **BEFESTIGUNGSVORRICHTUNG ZUM FESTLEGEN EINER KOMPONENTE EINES KRAFTFAHRZEUGS AN EINEM BAUTEIL SOWIE KRAFTFAHRZEUG MIT EINER DERARTIGEN BEFESTIGUNGSVORRICHTUNG**
FASTENING DEVICE FOR FIXING A COMPONENT OF A MOTOR VEHICLE TO A STRUCTURAL MEMBER, AND MOTOR VEHICLE HAVING SUCH A FASTENING DEVICE
DISPOSITIF D'ARRIMAGE POUR FIXER UN COMPOSANT D'UN VÉHICULE MOTORISÉ À UN ÉLÉMENT STRUCTUREL, ET VÉHICULE MOTORISÉ ÉQUIPÉ D'UN TEL DISPOSITIF D'ARRIMAGE

(30) Priorität: 13.01.2021 DE 102021200258
(43) Veröffentlichungstag der Anmeldung: 22.11.2023
(73) Patentinhaber: Stellantis Auto SAS, 78300 Poissy (FR)
(72) Erfinder: NORDMANN, Bjoern, 65428 Rüsselsheim am Main (DE)
(74) Vertreter: PSIP
(86) Internationale Anmeldenummer: PCT/EP2021/080496
(87) Internationale Veröffentlichungsnummer: WO 2022/152426

(56) Entgegenhaltungen:
- JP-B2- 4 689 208
- US-A1- 2005 098 688
- US-A1- 2015 125 235
- US-B2- 8 950 713

## Beschreibung

Die Erfindung betrifft ein Kraftfahrzeug mit einer Befestigungsvorrichtung zum Festlegen einer seiner Komponenten an einem Bauteil.

Aus dem Stand der Technik ist es bekannt, bei Kraftfahrzeugen, insbesondere im Motorraum, Komponenten eines Kraftfahrzeugs, wie beispielsweise Schläuche oder Kabel, an einem Luftfilterkasten festzulegen. Der Luftfilterkasten kann beispielsweise einen abnehmbaren Deckel umfassen, der am Luftfilterkasten in einem Fügebereich fügbar ist.

Aufgrund des im Motorraum nur sehr gering vorhandenen Bauraums, sind die bekannten Festlegemittel in einem Fügebereich des Luftfilterkastens, also in dem Bereich, an dem der Deckel auf das Luftfiltergehäuse aufgesetzt wird, angeordnet. Hierbei kann es bei bekannten Festlegemitteln nie ganz vermieden werden, dass der Deckel bei der Montage durch das Festlegemittel behindert wird oder dass das Festlegemittel zwischen dem Deckel und dem Luftfiltergehäuse geklemmt wird.

Weiterhin sind aus dem Stand der Technik die Dokumente US 8 950 713 B2, US 2015 125235 A1, JP 4 689208 B2 und US 2005 098688 A1 bekannt.

Eine Aufgabe eines Ausführungsbeispiels der Erfindung ist, ein Kraftfahrzeug mit einer Befestigungsvorrichtung zum Festlegen einer Komponente des Kraftfahrzeugs an einem Bauteil vorzuschlagen, bei der ein Montieren und Demontieren eines zweiten Bauteils an einem ersten Bauteil vereinfacht ist.

Diese Aufgabe wird gelöst durch ein Kraftfahrzeug gemäß Anspruch 1, mit mindestens einem erster Bauteil, mit einem am ersten Bauteil anordenbaren zweiten Bauteil, mit mindestens einer flexibel biegbaren Komponente und mit einer Befestigungsvorrichtung zum Festlegen der Komponente am ersten Bauteil , wobei die Befestigungsvorrichtung (2) aufweist: mindestens ein Festlegemittel das einen Festlegeabschnitt aufweist, an dem mindestens eine flexibel biegbare Komponente, insbesondere ein Kabel und/oder ein Schlauch, festlegbar ist, mit mindestens einem Aufnahmemittel, das einen Aufnahmeabschnitt umfasst, in den das Festlegemittel mit einem Koppelabschnitt des Festlegemittels entlang einer Koppelrichtung einführbar und darin festlegbar ist, und das an einer äußeren Oberfläche des ersten Bauteils des Kraftfahrzeugs an einem Fügebereich des ersten Bauteils angrenzend festlegbar oder festgelegt ist, wobei das zweite Bauteil entlang einer Fügerichtung in Richtung auf das erste Bauteil bewegbar und am ersten Bauteil am Fügegebereich festlegbar ist, wobei der Aufnahmeabschnitt des Aufnahmemittels und/oder der Koppelabschnitt des am Aufnahmemittel festgelegten Festlegemittels den Fügebereich entgegen der Fügerichtung zumindest bereichsweise überragen und wobei der Aufnahmeabschnitt des Aufnahmemittels zur äußeren Oberfläche des ersten Bauteils einen Abstand aufweist, durch den der Aufnahmeabschnitt und das am Aufnahmeabschnitt festgelegte Festlegemittel zum am Fügebereich angeordneten zweiten Bauteil - quer zur Fügerichtung betrachtet - zumindest durch einen Spalt berührungsfrei beabstandet sind.

Dadurch, dass der Aufnahmeabschnitt des Aufnahmemittels zur äußeren Oberfläche des ersten Bauteils einen Abstand aufweist, durch den der Aufnahmeabschnitt und das am Aufnahmeabschnitt festgelegte Festlegemittel zum am Fügebereich angeordneten Bauteil - quer zur Fügerichtung betrachtet - zumindest durch einen Spalt berührungsfrei beabstandet sind, kann das zweite Bauteil am ersten Bauteil montiert und demontiert werden, ohne mit dem Festlegemittel oder dem Aufnahmeabschnitt des Aufnahmemittels zu kollidieren. Ferner kann hierdurch vermieden werden, dass beim Montieren des zweiten Bauteils auf dem ersten Bauteil ein Bereich des Festlegemittels oder in einem Bereich des Aufnahmemittels zwischen erstem Bauteil und zweitem Bauteil eingeklemmt wird.

Der Abstand, der zumindest einen Spalt umfasst, ist zwischen den einander am nächsten liegenden Außenflächen des Festlegemittels bzw. des Aufnahmeabschnitts und dem zweiten Bauteil zu verstehen.

Es sind Ausführungsformen der Befestigungsvorrichtung denkbar, bei denen das Aufnahmemittel und das erste Bauteil zwei separate Bauteile umfassen und/oder bei denen das Aufnahmemittel lösbar oder unlösbar am ersten Bauteil festlegbar ist.

Wenn das Aufnahmemittel und das erste Bauteil zwei separate Bauteile umfassen, kann das Aufnahmemittel auf einfache Weise an bestehenden ersten Bauteilen nachgerüstet werden. Wenn das Aufnahmemittel lösbar am ersten Bauteil festlegbar ist, kann dieses einfach repariert oder, wenn es nicht benötigt wird, demontiert und wenn es wieder benötigt wird, montiert werden. Wenn das Aufnahmemittel unlösbar am ersten Bauteil festlegbar ist, kann dieses beispielsweise angeklebt, angeschweißt oder angelötet sein.

Die Befestigungsvorrichtung lässt sich bauteilreduziert und vormontiert ausgestalten, wenn das Aufnahmemittel und das erste Bauteil ein gemeinsames einstückiges Bauteil bilden, insbesondere ein gemeinsames Spritzgussteil.

Das Koppeln des Festlegemittels mit dem Aufnahmemittel lässt sich technisch einfach realisieren, wenn der Aufnahmeabschnitt des Aufnahmemittels eine, insbesondere in Koppelrichtung erstreckte, durchgehende Öffnung umfasst und/oder wenn der Koppelabschnitt des Festlegemittels mindestens ein schräg zur Koppelrichtung erstrecktes, elastisch verdrängbares Hakenelement umfasst, das beim Bewegen des Festlegemittels in Koppelrichtung quer zur Koppelrichtung durch den Rand der Öffnung verdrängt wird und das nach Überwinden der Öffnung in eine unverformte Grundstellung zurückgeführt wird und die Öffnung des Aufnahmeabschnitts entgegen der Koppelrichtung hintergreift.

Solchenfalls ist das Festlegemittel zumindest mit seinem Koppelabschnitt durch die Öffnung hindurchführbar und aufgrund des in die unverformte Grundstellung vorgespannten Hakenelements nach Passieren der Öffnung arretierbar. Darüber hinaus sind bei Ausführungsbeispielen der Festlegungsvorrichtung am Koppelabschnitt des Festlegemittels mehrere Hakenelemente vorgesehen, die bezüglich der Koppelrichtung auf gleicher Höhe verteilt sind. Hierdurch kann ein gleichmäßiger Hintergriff in der gekoppelten Anordnung erzielt werden.

Bei einer Weiterbildung letztgenannter Ausführungsform erweist es sich als vorteilhaft, wenn das Festlegemittel mindestens ein Spannelement umfasst, durch das das Festlegemittel zumindest in der am Aufnahmeabschnitt gekoppelten Anordnung in eine Richtung entgegen der Koppelrichtung spannbar ist.

Durch das Spannelement wird der Koppelabschnitt des Festlegemittels in der gekoppelten Anordnung mit einer Spannkraft entgegen der Koppelrichtung beaufschlagt. Gleichzeitig wird durch das elastisch verdrängbare Hakenelement, das einen Hintergriff mit der Öffnung des Aufnahmeabschnitts entgegen der Koppelrichtung bildet, eine Sicherung gegen ein Bewegen entgegen der Koppelrichtung realisiert. Durch beide Elemente ist ein spielfreies Anordnen des Festlegemittels in der am Aufnahmeabschnitt gekoppelten Anordnung realisiert.

Grundsätzlich ist es denkbar, dass die Öffnung lediglich durch einen rahmenelementartig ausgebildeten Aufnahmeabschnitt gebildet ist. Die Stabilität der Anordnung des Festlegemittels an dem Aufnahmemittel lässt sich erhöhen, wenn der Aufnahmeabschnitt mindestens eine Aufnahmefläche umfasst, die die Öffnung umfasst und die quer zur Koppelrichtung verläuft.

Die Koppelrichtung kann grundsätzlich in eine beliebige Richtung verlaufen. Bei einem Ausführungsbeispiel der Befestigungsvorrichtung ist vorgesehen, dass die Koppelrichtung schräg oder quer zur Fügerichtung verläuft.

Solchenfalls wird das Festlegemittel beim Fügen am Aufnahmemittel in Richtung auf das erste Bauteil und auf das zweite Bauteil bewegt.

Die Funktionalität des Aufnahmemittels lässt sich erhöhen, wenn das Aufnahmemittel mindestens einen Führungsabschnitt umfasst, der mit einem ersten Ende an einem das erste Bauteil in Fügerichtung überragenden Ende des Aufnahmeabschnitts festgelegt ist, der mit einem zweiten Ende zum Fügebereich benachbart am ersten Bauteil mündet und der zwischen dem ersten Ende und dem zweiten Ende eine geradlinige oder bogenförmige Führungskontur umfasst.

Solchenfalls dient das Aufnahmemittel gleichzeitig als Führungsmittel. Durch das Ausbilden eines Führungsabschnitts kann das zweite Bauteil beim Fügen an das erste Bauteil durch das Aufnahmemittel unterstützt werden. Solchenfalls sind erstes Bauteil und zweites Bauteil insbesondere in schwer zugänglichen Einbausituationen leichter miteinander fügbar.

Bei einer Weiterbildung letztgenannter Ausführungsform erweist es sich als vorteilhaft, wenn der Führungsabschnitt eine zwischen Aufnahmefläche und erstem Bauteil erstreckte und die Aufnahmefläche am ersten Bauteil festlegende Wandung umfasst, wobei die dem zweiten Bauteil zugewandte Außenkante die Führungskontur umfasst.

Wenn der Führungsabschnitt eine zwischen Aufnahmefläche und Bauteil erstreckte Wandung umfasst, kann hierdurch die Aufnahmefläche zum ersten Bauteil beabstandet und gehalten werden.

Insbesondere sind bei einer weiteren Ausführungsform letztgenannten Ausführungsbeispiels mindestens zwei parallel oder schräg zueinander verlaufende Führungsabschnitte vorgesehen, die jeweils an einer Außenkante der Aufnahmefläche mit der Aufnahmefläche verbunden sind und die gemeinsam mit der Aufnahmefläche und dem ersten Bauteil einen Hohlraum umschließen, der insbesondere in und/oder entgegen der Fügerichtung von außen zugänglich ist.

Hierdurch ist das Aufnahmemittel gewichtsreduziert und gleichzeitig stabil ausbildbar.

Ferner erweist es sich als vorteilhaft, wenn der Festlegeabschnitt des Festlegemittels mindestens einen ersten Festlegebereich für eine flexibel biegbare erste Komponente, insbesondere ein Kabel und/oder ein Schlauch, und einen zweiten Festlegebereich für eine flexibel biegbare zweite Komponente, insbesondere ein Kabel und/oder ein Schlauch, umfasst.

Hierdurch kann die Einsetzbarkeit der Befestigungsvorrichtung erweitert werden und mehrere Komponenten an einer Befestigungsvorrichtung gebündelt befestigt werden.

Das erste Bauteil und das zweite Bauteil können grundsätzlich beliebige Komponenten eines Kraftfahrzeugs umfassen. Bei einer Ausführungsform der Befestigungsvorrichtung ist vorgesehen, dass das erste Bauteil einen Luftfilterkasten eines Kraftfahrzeugs und/oder dass das zweite Bauteil einen Deckel des Luftfilterkastens umfasst.

Schließlich wird die Aufgabe gelöst durch ein Kraftfahrzeug mit mindestens einem ersten Bauteil mit mindestens einem am ersten Bauteil anordenbaren zweiten Bauteil mit mindestens einer flexibel biegbaren Komponente und mit mindestens einer Befestigungsvorrichtung mit mindestens einem der zuvor genannten Merkmale.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Befestigungsvorrichtung.

In der Zeichnung zeigt:
- Figur 1: Eine perspektivische Vorderansicht auf ein Ausführungsbeispiel der Befestigungsvorrichtung;
- Figur 2: Eine Detailansicht eines Aufnahmemittels der Befestigungsvorrichtung gemäß Figur 1;
- Figur 3: Eine Detailansicht eines Festlegemittels mit am Festlegemittel angeordneter Komponente der Befestigungsvorrichtung gemäß Figur 1.

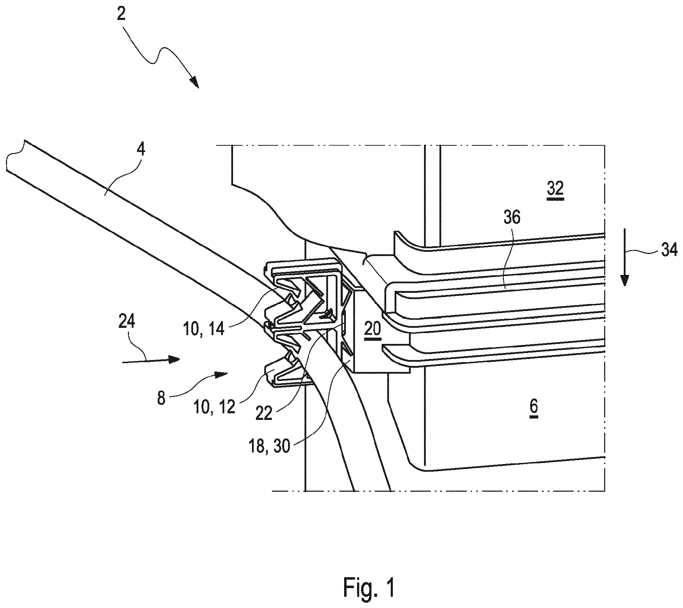

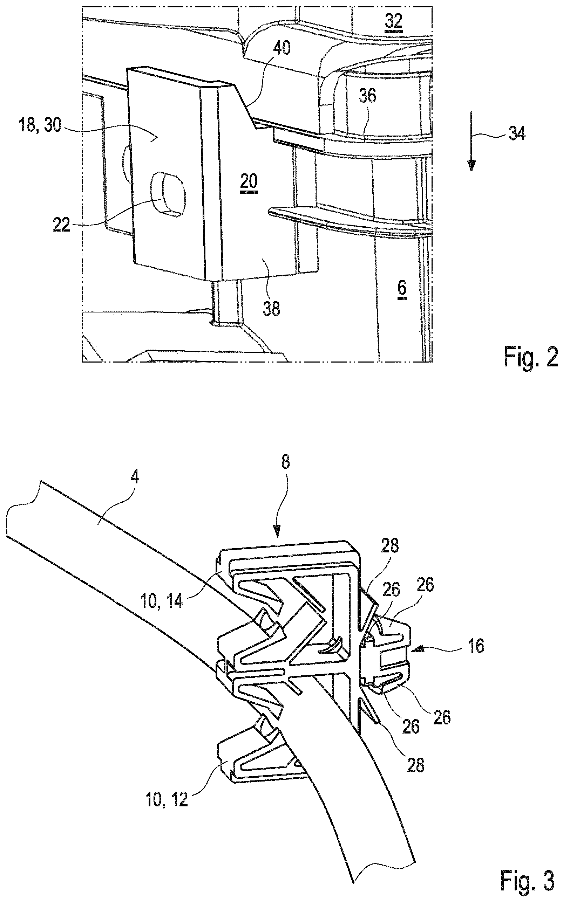

Figur 1 zeigt eine insgesamt mit dem Bezugszeichen 2 versehene Befestigungsvorrichtung zum Festlegen einer Komponente 4 eines Kraftfahrzeugs (in den Figuren nicht explizit dargestellt) an einem Bauteil 6. Die Befestigungsvorrichtung 2 umfasst ein Festlegemittel 8, das einen Festlegeabschnitt 10 aufweist, an dem mindestens eine flexibel biegbare Komponente 4 des Kraftfahrzeugs, insbesondere ein Kabel und/oder ein Schlauch, festlegbar ist. Bei dem in Figur 1 und in Figur 3 gezeigten Ausführungsbeispiel des Festlegemittels 8 umfasst dieser an seinem Festlegeabschnitt 10 einen ersten Festlegebereich 12 für eine flexibel biegbare erste Komponente 4 sowie einen zweiten Festlegebereich 14 für eine flexibel biegbare zweite Komponente 4. Darüber hinaus umfasst das Festlegemittel 8 einen Koppelabschnitt 16. Dieser Koppelabschnitt 16 des Festlegemittels 8 ist an einem Aufnahmeabschnitt 18 eines Aufnahmemittels 20 festlegbar. Der Aufnahmeabschnitt 18 des Aufnahmemittels 20 umfasst eine Öffnung 22, in die das Festlegemittel 8 mit seinem Koppelabschnitt 16 entlang einer Koppelrichtung 24 einführbar und darin festlegbar ist.

Bei dem in den Figuren gezeigten Ausführungsbeispiel umfasst der Koppelabschnitt 16 des Festlegemittels 8 mehrere Hakenelemente 26, die beim Bewegen des Festlegemittels 8 in Koppelrichtung 24 quer zur Koppelrichtung 24 durch den Rand der Öffnung 22 des Aufnahmeabschnitts 18 des Aufnahmemittels 20 verdrängt werden und welche nach Überwinden der Öffnung 22 in eine unverformte Grundstellung zurückkehren. In der unverformten Grundstellung bilden die Hakenelemente 26 mit der Öffnung 22 einen Hinterschnitt. Darüber hinaus ist bei dem in den Figuren gezeigten Ausführungsbeispielen am Festlegemittel 8 zusätzlich Spannelemente 28 vorgesehen, durch die das Festlegemittel 8 in der am Aufnahmeabschnitt 18 gekoppelten Anordnung in eine Richtung entgegen der Koppelrichtung 24 spannbar ist.

Der Aufnahmeabschnitt 18 des Aufnahmemittels 20 umfasst eine Aufnahmefläche 30, die die Öffnung 22 umfasst und die quer zur Koppelrichtung 24 verläuft.

Bei dem in den Figuren gezeigten Ausführungsbeispielen ist das Aufnahmemittel 20 an einem ersten Bauteil 6 festgelegt. Insbesondere umfassen erstes Bauteil 6 und Aufnahmemittel 20 ein gemeinsames, einstückiges Bauteil. An dem ersten Bauteil 6 ist ein zweites Bauteil 32 entlang einer Fügerichtung 34 in Richtung auf das erste Bauteil 6 bewegbar und am ersten Bauteil 6 an einem Fügebereich 36 festlegbar.

Der Aufnahmeabschnitt 18 des Aufnahmemittels 20 ist dabei derart ausgebildet, dass er den Fügebereich 36 entgegen der Fügerichtung 34 zumindest bereichsweise überragt. Um eine Kollision beim Fügen des zweiten Bauteils 32 mit dem ersten Bauteil 6 zu verhindern, umfasst der Aufnahmeabschnitt 18 des Aufnahmemittels 20 zum ersten Bauteil 6 einen derartigen Abstand, durch den der Aufnahmeabschnitt 18 und das am Aufnahmeabschnitt 18 festgelegte Festlegemittel 8 zum am Fügebereich 36 angeordneten zweiten Bauteil 32, quer zur Fügerichtung 34 betrachtet, zumindest durch einen Spalt berührungsfrei beabstandet sind.

Bei dem in den Figuren gezeigten Ausführungsbeispiel verlaufen Koppelrichtung 24 und Fügerichtung 34 schräg zueinander.

Um ein Fügen des zweiten Bauteils 32 am ersten Bauteil 6 zu erleichtern, umfasst das Aufnahmemittel 20 zwei verlaufende Führungsabschnitte 38, die jeweils an einer Außenkante der Aufnahmefläche 30 mit der Aufnahmefläche 30 verbunden sind und die gemeinsam mit der Aufnahmefläche 30 und den ersten Bauteil 6 einen gemeinsamen Hohlraum umschließen. Auf der dem zweiten Bauteil 32 zugewandten Seite der Führungsabschnitte 38 umfassen diese eine Führungskontur 40, die sich bogenförmig von einem dem Fügebereich 36 überragenden Ende des Aufnahmeabschnitts 18 bis zum Fügebereich 36 des ersten Bauteils 6 erstreckt.

### Bezugszeichenliste

- 2: Befestigungsvorrichtung
- 4: Komponente
- 6: erstes Bauteil
- 8: Festlegemittel
- 10: Festlegeabschnitt
- 12: erster Festlegebereich
- 14: zweiter Festlegebereich
- 16: Koppelabschnitt
- 18: Aufnahmeabschnitt
- 20: Aufnahmemittel
- 22: Öffnung
- 24: Koppelrichtung
- 26: Hakenelement
- 28: Spannelement
- 30: Aufnahmefläche
- 32: zweites Bauteil
- 34: Fügerichtung
- 36: Fügebereich
- 38: Führungsabschnitt
- 40: Führungskontur

## Patentansprüche

1. Kraftfahrzeug mit mindestens einem ersten Bauteil (6), mit einem am ersten Bauteil (6) anordenbaren zweiten Bauteil (32), mit mindestens einer flexibel biegbaren Komponente (4) und mit einer Befestigungsvorrichtung (2) zum Festlegen der Komponente (4) am ersten Bauteil (6), wobei die Befestigungsvorrichtung (2) aufweist: mindestens ein Festlegemittel (8), das einen Festlegeabschnitt (10) aufweist, an dem mindestens die flexibel biegbare Komponente (4), insbesondere ein Kabel und/oder ein Schlauch, festlegbar ist, mindestens ein Aufnahmemittel (20), das einen Aufnahmeabschnitt (18) umfasst, in den das Festlegemittel (8) mit einem Koppelabschnitt (16) des Festlegemittels (8) entlang einer Koppelrichtung (24) einführbar und darin festlegbar ist, und das an einer äußeren Oberfläche des ersten Bauteils (6) an einem Fügebereich (36) des ersten Bauteils (6) angrenzend festlegbar oder festgelegt ist, wobei das zweite Bauteil (32) entlang einer Fügerichtung (34) in Richtung auf das erste Bauteil (6) bewegbar und am ersten Bauteil (6) am Fügebereich (36) festlegbar ist, wobei der Aufnahmeabschnitt (18) des Aufnahmemittels (20) und/oder der Koppelabschnitt (16) des am Aufnahmemittel (20) festgelegten Festlegemittels (8) den Fügebereich (36) entgegen der Fügerichtung (34) zumindest bereichsweise überragen und wobei der Aufnahmeabschnitt (18) des Aufnahmemittels (20) zur äußeren Oberfläche des ersten Bauteils (6) einen Abstand aufweist, durch den der Aufnahmeabschnitt (18) und das am Aufnahmeabschnitt (18) festgelegte Festlegemittel (8) zum am Fügebereich (36) angeordneten zweiten Bauteil (32) - quer zur Fügerichtung (34) betrachtet - zumindest durch einen Spalt berührungsfrei beabstandet sind.

2. Kraftfahrzeug nach Anspruch 1, **dadurch gekennzeichnet, dass** das Aufnahmemittel (20) und das erste Bauteil (6) zwei separate Bauteile (6) umfassen und/oder dass das Aufnahmemittel (20) lösbar oder unlösbar am ersten Bauteil (6) festlegbar ist.

3. Kraftfahrzeug nach Anspruch 1, **dadurch gekennzeichnet, dass** das Aufnahmemittel (20) und das erste Bauteil (6) ein gemeinsames einstückiges Bauteil bilden, insbesondere ein gemeinsames Spritzgussteil.

4. Kraftfahrzeug nach mindestens einem der vorhergehenden Ansprüche, **dadurch gekennzeichnet, dass** der Aufnahmeabschnitt (18) des Aufnahmemittels (20) eine, insbesondere in Koppelrichtung (24) erstreckte, durchgehende Öffnung (22) umfasst und/oder dass der Koppelabschnitt (16) des Festlegemittels (8) mindestens ein schräg zur Koppelrichtung (24) erstrecktes, elastisch verdrängbares Hakenelement (26) umfasst, das beim Bewegen des Festlegemittels (8) in Koppelrichtung (24) quer zur Koppelrichtung (24) durch den Rand der Öffnung (22) verdrängt wird und das nach Überwinden der Öffnung (22) in eine unverformte Grundstellung zurückgeführt wird und die Öffnung (22) des Aufnahmeabschnitts (18) entgegen der Koppelrichtung (24) hintergreift.

5. Kraftfahrzeug nach Anspruch 4, **dadurch gekennzeichnet, dass** das Festlegemittel (8) mindestens ein Spannelement (28) umfasst, durch das das Festlegemittel (8) zumindest in der am Aufnahmeabschnitt (18) gekoppelten Anordnung in eine Richtung entgegen der Koppelrichtung (24) spannbar ist.

6. Kraftfahrzeug nach mindestens einem der vorhergehenden Ansprüche, **dadurch gekennzeichnet, dass** der Aufnahmeabschnitt (18) mindestens eine Aufnahmefläche (30) umfasst, die die Öffnung (22) umfasst und die quer zur Koppelrichtung (24) verläuft.

7. Kraftfahrzeug nach mindestens einem der vorhergehenden Ansprüche, **dadurch gekennzeichnet, dass** die Koppelrichtung (24) schräg oder quer zur Fügerichtung (34) verläuft.

8. Kraftfahrzeug nach mindestens einem der vorhergehenden Ansprüche, **dadurch gekennzeichnet, dass** das Aufnahmemittel (20) mindestens einen Führungsabschnitt (38) umfasst, der mit einem ersten Ende an einem das erste Bauteil (6) in Fügerichtung (34) überragenden Ende des Aufnahmeabschnitts (18) festgelegt ist, der mit einem zweiten Ende zum Fügebereich (36) benachbart am ersten Bauteil (6) mündet und der zwischen dem ersten Ende und dem zweiten Ende eine geradlinige oder bogenförmige Führungskontur (40) umfasst.

9. Kraftfahrzeug nach Anspruch 8, **dadurch gekennzeichnet, dass** der Führungsabschnitt (38) eine zwischen Aufnahmefläche (30) und erstem Bauteil (6) erstreckte und die Aufnahmefläche (30) am ersten Bauteil (6) festlegende Wandung umfasst, wobei die dem zweiten Bauteil (32) zugewandte Außenkante die Führungskontur (40) umfasst.

10. Kraftfahrzeug nach Anspruch 9, **gekennzeichnet durch** zwei, insbesondere parallel oder schräg zueinander verlaufende Führungsabschnitte (38), die jeweils an einer Außenkante der Aufnahmefläche (30) mit der Aufnahmefläche (30) verbunden sind und die gemeinsam mit der Aufnahmefläche (30) und dem ersten Bauteil (6) einen Hohlraum umschließen, der insbesondere in und/oder entgegen der Fügerichtung (34) von außen zugänglich ist.

11. Kraftfahrzeug nach mindestens einem der vorhergehenden Ansprüche, **dadurch gekennzeichnet, dass** der Festlegeabschnitt (10) des Festlegemittels (8) mindestens einen ersten Festlegebereich (12) für eine flexibel biegbare erste Komponente (4), insbesondere ein Kabel und/oder ein Schlauch, und einen zweiten Festlegebereich (14) für eine flexibel biegbare zweite Komponente (4), insbesondere ein Kabel und/oder ein Schlauch, umfasst.

12. Kraftfahrzeug nach mindestens einem der vorhergehenden Ansprüche, **dadurch gekennzeichnet, dass** das erste Bauteil (6) einen Luftfilterkasten eines Kraftfahrzeugs und/oder dass das zweite Bauteil (32) einen Deckel des Luftfilterkastens umfasst.

## Claims

1. Motor vehicle with at least one first Component (6), with a on first component (6) second Component (32), with at least one flexible Component (4) and with a Fastening device (2) for Setting the component (4) on first Component (6), wherein the fastening device (2) comprises : at least a Fixing means (8) which a fixing section (10) on which at least the flexible Component (4), in particular a Cable and / or a hose , fixable is, at least a Recording means (20) that a Receiving section (18) into which the Fixing means (8) with a Coupling section (16) of the fixing means (8) along one coupling direction (24) insertable and in it definable is , and that at a external surface of the first component (6) on a Joining area (36) of the first component (6) adjacent definable or set is , where the second component (32) along one Joining direction (34) in the direction on the first component (6) movable and on first Component (6) on joining area (36) can be defined is , wherein the receiving portion (18) of the receiving means (20) and / or the coupling portion (16) of the recording medium (20) Fixing means (8) the joining area (36) against the Joining direction (34) at least in some areas towering and wherein the receiving portion (18) of the receiving means (20) for external surface of the first component (6) a Distance through which the receiving portion (18) and the on Recording section (18) Fixing means (8) for on joining area (36) arranged second component (32) - transverse to joining direction (34) considered - at least through a gap without contact spaced apart are.

2. Motor vehicle after claim 1, **characterized in that** the receiving means (20) and the first Component (6) comprise two separate components (6) and/ or that the recording medium (20) Itisbar or unltisbar on first component (6) can be fixed is.

3. Motor vehicle after claim 1, **characterized by** the recording medium (20) and the first component (6 ) common one-piece component form , especially a common injection-molded part .

4. Motor vehicle after at least one of the previous claims , thereby **characterized in that** the receiving section (18) of the receiving means ( 20) has a continuous , in particular in the coupling direction (24) extending opening (22) includes and / or that the coupling section (16) of the fixing means (8) at least a oblique to coupling direction (24) extended , elastic repressible Hook element (26) which, when Moving the fixing means (8) in the coupling direction (24) transversely to coupling direction (24) displaced by the edge of the opening (22) and that after Overcoming the opening (22) in a undeformed basic position returned and the Opening (22) of the receiving section (18) engages behind opposite to the coupling direction (24)

5. Motor vehicle after Claim 4, **characterized in that** the fixing means (8) has at least a Clamping element (28) through which the Fixing means (8) at least in the direction coupled to the receiving section (18) arrangement in a Direction tensioned against the coupling direction (24) is .

6. Motor vehicle after at least one of the previous claims, thereby **characterized in that** the receiving section (18) has at least one Receiving surface (30) which comprises the opening (22) and the transverse to Coupling direction (24) runs.

7. Motor vehicle after at least one of the previous claims, thereby **characterized in that** the coupling direction (24) is oblique or across to Joining direction (34) runs.

8. Motor vehicle after at least one of the previous claims, thereby **characterized by** the Recording means (20) at least a Guide section (38) which is provided with a first end on a the first Component (6) in the joining direction (34) projecting end of the receiving section (18 ) is , which with a second end to joining area (36) adjacent on first Component (6) opens and the one between dem first end and dem second end a straight lines or arched towers Guide contour (40) includes .

9. Motor vehicle after claim 8, thereby **characterized in that** the guide section (38) has a between receiving surface (30) and first component (6) extended and the receiving surface (30) on the first component (6) fixing wall includes, whereby the second The outer edge facing the component (32) comprises the guide contour (40) .

10. Motor vehicle after Claim 9, characterized through two, especially parallel or oblique to each other running Guide sections (38) which are each connected to the receiving surface (30) at an outer edge of the receiving surface (30) and which together with the receiving surface (30) and the first component (6) a Cavity, which is particularly in and/ or accessible from the outside against the joining direction (34) is .

11. Motor vehicle after at least one of the previous claims, thereby **characterized in that** the fixing section (10) of the fixing means (8) is at least a first Fixing area (12) for a flexible first Component (4), in particular a cable and/ or a hose , and a second Fixing area (14) for a flexible second Component (4), in particular a cable and/ or a hose , includes .

12. Motor vehicle after at least one of the previous claims , thereby **characterized by** the first component (6) a air filter box one motor vehicle and / or that the second component (32) a cover of the air filter box includes.

## Revendications

1. Véhicule à moteur avec au moins un d'abord Composant (6), avec un sur d'abord composant (6 ) deuxième Composant (32), avec au moins un flexible Composant (4) et avec un Dispositif de fixation (2) pour Réglage du composant (4) sur d'abord Composant (6), dans lequel le dispositif de fixation (2) comprend : au moins un Moyens de fixation (8) qui un section de fixation (10) sur laquelle au moins le flexible Composant (4), en particulier un Câble et / ou un tuyau , réparable est ,
au moins un L'enregistrement signifie (20) que un Section de réception (18) dans laquelle le Moyens de fixation (8) avec un Section de couplage (16) du moyen de fixation (8) le long un sens d'accouplement (24) insérable et dedans définissable est , et qu'à un externe surface de la première composant (6) sur un Zone de jonction (36) du premier composant (6) adjacent définissable ou ensemble est , où le deuxième composant (32) le long un Direction de jonction (34) dans la direction sur le d'abord composant (6) mobile et sur d'abord Composant (6) sur la zone de jonction (36) peut être définie est , dans lequel la partie de réception (18) du moyen de réception (20) et / ou la partie de couplage (16) du support d'enregistrement (20) Moyens de fixation (8) de la zone de jonction (36) contre la direction de jonction (34) au moins dans certaines régions imposant et dans lequel la partie de réception (18) du moyen de réception (20) pour externe surface de la première composant (6) a Distance à travers laquelle la partie réceptrice ( 18) et le sur Section d'enregistrement (18) Moyens de fixation (8) pour sur zone de jonction (36) agencée deuxième composante (32) - transversale à direction de jonction (34) considéré - au moins à travers un espace sans contact espacés sont .

2. Véhicule automobile après revendication 1, **caractérisé en ce que** le moyen de réception (20) et le premier Le composant (6) comprend deux composants distincts (6) et/ ou que le support d'enregistrement (20) Itisbar ou unitébar sur d'abord le composant (6) peut être fixé est .

3. Véhicule automobile après revendication 1, caractérisée **caractérisé par** le support d'enregistrement (20) et le d'abord composant (6 ) commun une pièce composant forme , en particulier un commun pièce moulée par injection .

4. Véhicule automobile après au moins l'une des précédentes revendications , par conséquent **caractérisé en ce que** la section de réception (18) du moyen de réception ( 20) présente une section continue , en particulier dans la direction de couplage (24), s'étendant l'ouverture (22) comprend et / ou que la section de couplage (16) du moyen de fixation (8) au moins un oblique à direction d'accouplement (24) étendue , élastique répressible Elément de crochet (26) qui, lorsque Déplacement des moyens de fixation (8) dans le sens de couplage (24) transversalement à direction d'accouplement (24) déplacée par le bord de l' ouverture (22) et qu'après Surmonter l' ouverture (22) dans un non déformé position de base retourné et L'ouverture (22) de la section de réception (18) s'engage derrière le sens opposé à celui de l'accouplement (24) .

5. Véhicule automobile après Revendication 4, caractérisée **caractérisé en ce que** le moyen de fixation (8) présente au moins un Elément de serrage (28 ) à travers lequel le moyens de fixation (8) au moins dans la direction couplée à la section de réception (18) disposition dans un Direction tendu contre le sens d'accouplement (24 .

6. Véhicule automobile après au moins l'une des précédentes revendications, par conséquent **caractérisé en ce que** la section de réception (18) présente au moins un surface de réception (30) qui comprend le ouverture (22) et la transversale à le sens d'accouplement (24) fonctionne.

7. Véhicule automobile après au moins l'une des précédentes revendications, par conséquent **caractérisé en ce que** la direction de couplage (24) est oblique ou à travers à la direction de jonction (34) s'exécute.

8. Véhicule automobile après au moins l'une des précédentes revendications, par conséquent **caractérisé par** le Des moyens d'enregistrement (20) au moins un Section de guidage (38) qui est dotée d'une première extrémité sur un le d'abord Composant (6) dans le sens de jonction (34) extrémité saillante de la section de réception (18) est , qui avec une deuxième extrémité à zone de jonction (36) adjacente sur d'abord Le composant (6) s'ouvre et celui entre la première fin et la deuxième extrémité a lignes droites ou tours arquées Le contour de guidage (40) comprend .

9. Véhicule automobile après revendication 8, par conséquent **caractérisé en ce que** la section de guidage (38) a une entre surface de réception (30) et d'abord composant (6) étendu et la surface de réception (30) sur le d'abord composant (6) fixation mur comprend, par lequel le deuxième Le bord extérieur tourné vers le composant (32) comprend le contour de guidage (40).

10. Véhicule à moteur après Revendication 9, caractérisée à travers deux, surtout parallèle ou oblique l'un à l'autre en cours d'exécution Sections de guidage (38) qui sont chacune reliées à la surface de réception (30) au niveau d'un bord extérieur de la surface de réception (30) et qui ensemble avec la surface de réception (30) et la première composant (6) a Cavité , qui se trouve particulièrement dans et/ ou accessible de l'extérieur contre le sens de jonction (34).

11. Véhicule automobile après au moins l'un des précédents revendications, par conséquent **caractérisé en ce que** la section de fixation (10) du moyen de fixation (8) est au moins un d'abord Zone de fixation (12) pour un flexible d'abord Composant (4), en particulier un câble et/ ou un tuyau et un deuxième Zone de fixation (14) pour un flexible deuxième Composant (4), en particulier un câble et/ ou un tuyau , comprend .

12. Véhicule automobile après au moins l'un des précédents revendications, par conséquent **caractérisé par** le d'abord composant (6) a boîte de filtre à air un véhicule automobile et / ou que le deuxième composant (32) a couvercle du boîtier du filtre à air comprend .
